# EUROPÄISCHE PATENTANMELDUNG

(11) **EP 3 757 536 A1**
(43) Veröffentlichungstag der Anmeldung: **30.12.2020**
(21) Anmeldenummer: 20179171.2
(22) Anmeldetag: 10.06.2020
(51) Int. Cl.: G01L 1/16, G01L 5/00, H01R 43/00

(54) **KONTAKTKRAFTMESSVORRICHTUNG UND VERFAHREN ZUM MESSEN EINER KONTAKTKRAFT MIT EINER SOLCHEN KONTAKTKRAFTMESSVORRICHTUNG**

(30) Priorität: 25.06.2019 EP 19182313
(71) Anmelder: Kistler Holding AG, 8408 Winterthur (CH)
(72) Erfinder: STAUB, Reinhard, 8704 Herrliberg (CH); Lehmann, Andri, 8212 Neuhausen (CH); Cavalloni, Claudio, 8105 Regensdorf (CH)

(57) **Zusammenfassung**

Die Erfindung betrifft eine Kontaktkraftmessvorrichtung (10), zum Messen einer Kontaktkraft (F, F') eines Federkontaktes (2); der Federkontakt (2) weist einen Kontaktstift (2.1) und Federkontaktarme (2.2, 2.2') auf, bei einem Kontaktieren vom Kontaktstift (2.1) mit den Federkontaktarmen (2.2, 2.2') üben die Federkontaktarme (2.2, 2.2') die Kontaktkraft (F, F') auf den Kontaktstift (2.1) aus; die Kontaktkraftmessvorrichtung (10) weist einen Messfühler (1) auf, der in einem Kontaktbereich (d) eine identische Höhe (h') wie der Kontaktstift (2.1) aufweist; zum Messen der Kontaktkraft (F, F') ist der Messfühler (1) (1) im Kontaktbereich (d) mit den Federkontaktarmen (2.2, 2.2') kontaktierbar; wobei der Messfühler (1) Isolatorelemente (1.2, 1.2') aufweist, welche mit den Federkontaktarmen (2.2, 2.2') kontaktierbar sind.

## Beschreibung

### Technisches Gebiet

Die Erfindung betrifft eine Kontaktkraftmessvorrichtung nach dem Oberbegriff des unabhängigen Vorrichtungsanspruches. Die Erfindung betrifft auch ein Verfahren zum Messen einer Kontaktkraft mit einer Kontaktkraftmessvorrichtung nach dem Oberbegriff des unabhängigen Verfahrensanspruches.

### Stand der Technik

Elektrische Steckverbindungen sind bekannt. Sie ermöglichen ein Kontaktieren von elektrischen Leitungen. Dabei wird ein männliches Teil der elektrischen Steckverbindung (mit einem aussen weisenden Kontaktstift) mit einem weiblichen Teil der elektrischen Steckverbindung (mit einer nach innen weisenden Kontaktöffnung) mechanisch und elektrisch kontaktiert. Beim Kontaktieren liegen der männliche Teil und der weibliche Teil in einem Kontaktbereich direkt aufeinander und es wird eine Kontaktkraft aufgebracht. Die Kontaktkraft sorgt für einen dauerhaft stabilen mechanischen und elektrischen Kontakt der elektrischen Steckverbindung und sie sorgt für einen dauerhaft geringen elektrischen Kontaktwiderstand der elektrischen Steckverbindung.

Im Folgenden wird die Erfindung am Beispiel einer elektrischen Steckverbindung in der Ausführungsform eines Federkontaktes beschrieben. Der Federkontakt weist ein weibliches Teil mit zwei Federkontaktarmen auf. Zwischen den zwei Federkontaktarmen ist eine Kontaktöffnung für einen Kontaktstift angeordnet. Zum Kontaktieren wird der Kontaktstift in die Kontaktöffnung gesteckt. Beim Kontaktieren üben die Federkontaktarme eine Kontaktkraft auf den Kontaktstift aus.

Solche Federkontakte werden in grossen Stückzahlen hergestellt und industriell vielfältig eingesetzt. Die Federkontakte haben sehr unterschiedliche Abmessungen. Ein gemeinsames Merkmal der Federkontakte ist jedoch, dass die Kontaktkraft einen vordefinierten Wert mit enger Toleranz erfüllen muss. Daher wird zur Qualitätskontrolle der hergestellten Federkontakte die Federkraft mit einer Kontaktkraftmessvorrichtung gemessen.

Die Schrift DE4003552A1 zeigt eine bekannte Kontaktkraftmessvorrichtung. Die Kontaktkraftmessvorrichtung misst eine Kontaktkraft von Federkontaktarmen eines Federkontaktes. Die Kontaktkraftmessvorrichtung weist einen Messfühler auf, der in einem Kontaktbereich die identischen äusseren Abmessungen wie ein Kontaktstift des Federkontaktes aufweist. Zum Messen der Kontaktkraft wird der Messfühler in die Kontaktöffnung zwischen den zwei Federkontaktarmen gesteckt, derart, dass der Messfühler in einem Kontaktbereich mechanisch mit den Federkontaktarmen kontaktiert. Der Messfühler weist einen flächigen piezoelektrischen Film auf, der entlang einer Horizontalachse zwischen zwei Kontaktstifthälften angeordnet ist. Die Federkontaktarme üben die Kontaktkraft auf die Kontaktstifthälften aus. Um bei häufigem Kontaktieren einen Abrieb gering zu halten, sind die zwei Kontaktstifthälften aus Hartmetall. Die Kontaktstifthälften leiten die Kontaktkraft entlang einer Vertikalachse auf den piezoelektrischen Film. Die Kontaktkraft wirkt normal zur Fläche des piezoelektrischen Films. Gemäss dem piezoelektrischen Longitudinaleffekt erzeugt der piezoelektrische Film unter der Wirkung der Kontaktkraft elektrische Ladungen, deren Menge proportional zur Grösse der Kontaktkraft ist. Die Menge der erzeugten elektrischen Ladungen wird auf Oberflächen des piezoelektrischen Films von Elektroden abgegriffen und gemessen und ist ein Mass für die Kontaktkraft. Jede der Elektroden ist über eine Isolierschicht elektrisch von den Kontaktstifthälften isoliert.

Nun ist der Messfühler der bekannten Kontaktkraftmessvorrichtung biegeempfindlich. Beim Messen verbiegt sich der Messfühler entlang der Vertikalachse. Gemäss dem piezoelektrischen Schubeffekt erzeugt der piezoelektrische Film beim Verbiegen weitere elektrische Ladungen, die auf den Oberflächen des piezoelektrischen Films von den Elektroden abgegriffen werden und die das Messen der Kontaktkraft verfälschen. Die Kontaktkraft lässt sich mit der bekannten Kontaktkraftmessvorrichtung somit nur ungenau messen. Wünschenswert ist ein Messen der Kontaktkraft mit einer Standardabweichung von ≤1%.

Der Messfühler der bekannten Kontaktkraftmessvorrichtung unterliegt im Betrieb einem Abrieb beim Auf- und Abstecken von den Federkontaktarmen. Der Abrieb verändert mit der Zeit die äusseren Abmessungen des Messfühlers, was zum einen das Messen der Kontaktkraft verfälscht und zum anderen die Lebensdauer der Kontaktkraftmessvorrichtung beschränkt.

Zudem ist der Aufbau des Messfühlers der bekannten Kontaktkraftmessvorrichtung aufwändig. Im Längsschnitt betrachtet, ist der piezoelektrische Film beidseitig mit Elektroden versehen, auf jeder der Elektroden ist eine Isolierschicht angebracht, und jede Isolierschicht ist mit einer Kontaktstifthälften verbunden. Die bekannte Kontaktkraftmessvorrichtung ist daher teuer in der Herstellung.

Und beim Messen der Kontaktkraft mit der bekannten Kontaktkraftmessvorrichtung können der Messfühler und die Federkontaktarme fehlerhaft gesteckt (Quersteckung) sein und das Messen der Kontaktkraft verfälschen. So kann durch eine Quersteckung eine weitere Kraftkomponente auftreten, die zusätzlich zur Kontaktkraft gemessen wird. Um sicherzustellen, dass die Kontaktkraft unverfälscht gemessen wird, muss das Messen der Kontaktkraft mehrmals wiederholt werden, was zeitaufwändig ist. Wünschenswert ist daher ein rasches und unverfälschtes Messen der Kontaktkraft.

Eine erste Aufgabe der vorliegenden Erfindung ist es, eine Kontaktkraftmessvorrichtung aufzuzeigen, die eine Kontaktkraft eines Federkontaktes mit hoher Genauigkeit misst. Als zweite Aufgabe der Erfindung soll die Kontaktkraftmessvorrichtung im Betrieb langlebig sein. Eine dritte Aufgabe der Erfindung besteht darin, eine Kontaktkraftmessvorrichtung mit kostengünstig herzustellendem Aufbau anzugeben. Und die Erfindung stellt sich die vierte Aufgabe, ein Verfahren zum Messen einer Kontaktkraft eines Federkontaktes mit einer Kontaktkraftmessvorrichtung bereitzustellen, welches Verfahren rasch und ohne Verfälschung durchführbar ist.

### Darstellung der Erfindung

Zumindest eine der Aufgaben wird durch die Merkmale der unabhängigen Ansprüche gelöst.

Die Erfindung betrifft eine Kontaktkraftmessvorrichtung zum Messen einer Kontaktkraft eines Federkontaktes; der Federkontakt weist einen Kontaktstift und Federkontaktarme auf, bei einem Kontaktieren vom Kontaktstift mit den Federkontaktarmen üben die Federkontaktarme die Kontaktkraft auf den Kontaktstift aus; die Kontaktkraftmessvorrichtung weist einen Messfühler auf, der in einem Kontaktbereich eine identische Höhe wie der Kontaktstift aufweist; zum Messen der Kontaktkraft ist der Messfühler im Kontaktbereich mit den Federkontaktarmen kontaktierbar, wobei der Messfühler Isolatorelemente aufweist, welche mit den Federkontaktarmen kontaktierbar sind.

Im Unterschied zur bekannten Kontaktkraftmessvorrichtung kontaktiert der erfinderischen Kontaktkraftmessvorrichtung über Isolatorelemente mit den Federkontaktarmen. Die Kontaktstifthälften aus Hartmetall der bekannten Kontaktkraftmessvorrichtung sind weggelassen worden, was den Aufbau des Messfühlers vereinfacht und eine kostengünstige Herstellung ergibt.

Vorzugsweise kontaktieren die Isolatorelemente über Kontaktoberflächen direkt mit den Federkontaktarmen. Und die Kontaktoberflächen weisen eine Vickers-Härte im Bereich von 1200 bis 1500 auf. Die Kontaktoberflächen der Isolatorelemente sind daher sehr abriebfest und ermöglichen eine sehr hohe Kontaktierzahl von 10⁶. Die erfindungsgemässe Kontaktkraftmessvorrichtung ist im Betrieb somit sehr langlebig. Zwar sind die Kontaktstifthälften der bekannten Kontaktkraftmessvorrichtung aus Hartmetall. Und ein im Maschinenbau gebräuchliches Hartmetall ist martensitischer rostfreier Chromstahl mit der Werkstoffnummer 14016. Doch die Vickers-Härte von diesem Hartmetall ist kleiner als 200. Entsprechend dieser um fast eine Grössenordnung grösseren Härte ist die erfindungsgemässe Kontaktkraftmessvorrichtung im Betrieb somit sehr langlebig.

Vorzugsweise weisen die Isolatorelemente einen Elastizitätsmodul (E-Modul) im Bereich von 350GPa bis 470GPa auf. Die Kontaktstifthälften der bekannten Kontaktkraftmessvorrichtung sind aus Hartmetall. Ein im Maschinenbau gebräuchliches Hartmetall ist martensitischer rostfreier Chromstahl mit der Werkstoffnummer 1.4016. Der E-Modul von diesem Hartmetall beträgt 220GPa. Der E-Modul der Isolatorelemente der erfindungsgemässen Kontaktkraftmessvorrichtung ist somit rund doppelt so gross wie derjenige vom Hartmetall der Kontaktstifthälften. Der Messfühler der erfindungsgemässen Kontaktkraftmessvorrichtung ist daher vergleichsweise deutlich biegesteifer.

Die Erfindung betrifft auch ein Verfahren zum Messen einer Kontaktkraft eines Federkontaktes mit einer Kontaktkraftmessvorrichtung; der Federkontakt weist einen Kontaktstift und Federkontaktarme auf, bei einem Kontaktieren vom Kontaktstift mit den Federkontaktarmen üben die Federkontaktarme die Kontaktkraft auf den Kontaktstift aus; die Kontaktkraftmessvorrichtung weist einen Messfühler auf, der in einem Kontaktbereich die identischen äusseren Abmessungen wie der Kontaktstift aufweist; zum Messen der Kontaktkraft ist der Messfühler im Kontaktbereich mit den Federkontaktarmen kontaktierbar, wobei der Messfühler in einer Haltevorrichtung in einer vordefinierten Messhaltung gehalten wird; wobei die Federkontaktarme von einer Positioniervorrichtung in eine vordefinierte Messposition positioniert werden; und wobei der Messfühler Isolatorelemente aufweist, welche Isolatorelemente in der vordefinierten Messposition mit den Federkontaktarmen im Kontaktbereich kontaktieren.

Die Verwendung Haltevorrichtung zum Halten des Messfühlers in einer vordefinierten Messhaltung sowie die Verwendung einer Positioniervorrichtung zum Positionieren der Federkontaktarme in einer vordefinierte Messposition ermöglicht ein rasches und unverfälschtes Messen der Kontaktkraft. Auch ist das Messen der Kontaktkraft somit sehr genau mit einer Standardabweichung von ≤1%.

### Kurze Beschreibung der Zeichnungen

Im Folgenden wird die Erfindung in zwei bevorzugten Ausführungsformen beispielhaft unter Beizug der Figuren näher erklärt. Es zeigen
- Fig. 1: eine Darstellung im Querschnitt eines Teiles eines Federkontaktes mit Kontaktstift und Federkontaktarmen;
- Fig. 2: eine schematische Ansicht einer Kontaktkraftmessvorrichtung mit einem Messfühler, bevor Federkontaktarme des Federkontaktes nach Fig. 1 in einer vordefinierten Messposition mit dem Messfühler positioniert sind;
- Fig. 3: eine schematische Ansicht der Kontaktkraftmessvorrichtung mit einem Messfühler nach Fig. 2, nachdem Federkontaktarme des Federkontaktes nach Fig. 1 in der vordefinierten Messposition mit dem Messfühler positioniert sind;
- Fig. 4: eine vergrösserte Darstellung im Querschnitt eines Teiles einer ersten Ausführungsform des Messfühlers der Kontaktkraftmessvorrichtung nach Fig. 2 und 3, beim Messen einer Kontaktkraft des Federkontaktes nach Fig. 1;
- Fig. 5: eine vergrösserte Darstellung im Querschnitt eines Teiles einer zweiten Ausführungsform des Messfühlers der Kontaktkraftmessvorrichtung nach Fig. 2 und 3, beim Messen einer Kontaktkraft des Federkontaktes nach Fig. 1; und
- Fig. 6: eine Darstellung eines Ergebnisses der Auswertung von Messsignalen in der Auswerteeinheit der Kontaktkraftmessvorrichtung nach Fig. 2 oder 3.

### Wege zur Ausführung der Erfindung

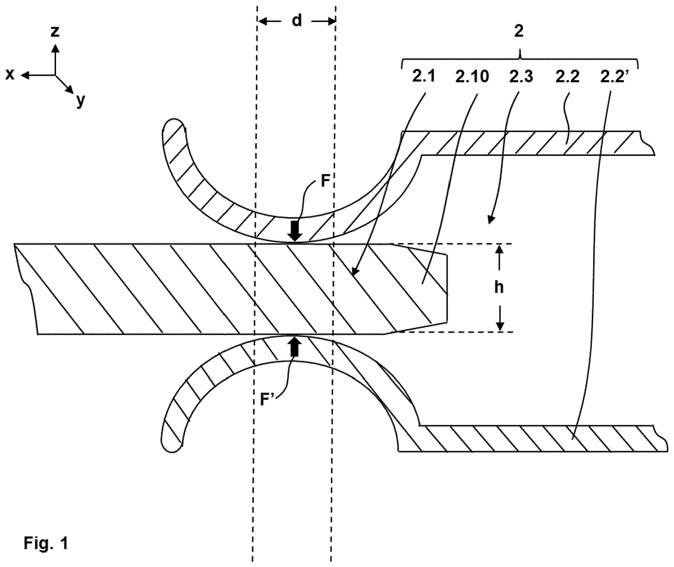

Fig. 1 zeigt einen Teil eines Federkontaktes 2 mit einem Kontaktstift 2.1 und zwei Federkontaktarmen 2.2, 2.2'. Der Federkontakt 2 besteht aus elektrisch leitfähigem Material wie aus Reinmetallen, Metalllegierungen, usw. Jeder Federkontaktarm 2.2, 2.2' hat eine Federkonstante. Zwischen den zwei Federkontaktarmen 2.2, 2.2' ist eine Kontaktöffnung 2.3 für den Kontaktstift 2.1 angeordnet. Der Kontaktstift 2.1 weist ein zugespitztes vorderes Ende 2.10 auf. Das zugespitzte vordere Ende 2.10 weist entlang der Vertikalachse z eine geringere Höhe auf, als eine Höhe h des Kontaktstiftes 2.1.

Zum Kontaktieren wird der Kontaktstift 2.1 entlang einer Horizontalachse x in die Kontaktöffnung 2.3 gesteckt. In einem Kontaktbereich d kontaktiert der Kontaktstift 2.1 mit den Federkontaktarmen 2.2, 2.2' mechanisch und elektrisch. Beim Kontaktieren berührt zuerst das zugespitzte vordere Ende 2.10 des Kontaktstiftes 2.1 die Federkontaktarme 2.2, 2.2' und lenkt die Federkontaktarme 2.2, 2.2' entlang einer Vertikalachse z aus. Der Kontaktstift 2.1 wird soweit entlang der Horizontalachse x in die Kontaktöffnung 2.3 gesteckt, bis dass das zugespitzte vordere Ende 2.10 vollständig in der Kontaktöffnung 2.3 liegt. Wie in Fig. 1 dargestellt, liegt der Kontaktstift 2.1 nun entlang der Vertikalachse z mit seiner Höhe h zwischen den Federkontaktarmen 2.2, 2.2'. Als Reaktion üben die räumlich ausgelenkten Federkontaktarme 2.2, 2.2' entlang der Vertikalachse z eine Kontaktkraft F, F' auf den eingesteckten Kontaktstift 2.1 aus. Die Kontaktkraft F, F' wirkt in einem Kontaktbereich d. Je nach Abmessung des Federkontaktes 2 liegt die Kontaktkraft F, F' im Bereich von 2N bis 50N. Eine Länge des Kontaktstiftes 2.1 entlang der Horizontalachse x ist beispielsweise 12mm.

Die Höhe h des Kontaktstiftes 2.1 entlang der Vertikalachse z ist beispielsweise 0.6mm oder 0.8mm. Eine Breite des Kontaktstiftes 2.1 entlang einer Schrägachse y ist beispielsweise 2.4mm. Im Beispiel nach Fig. 1 ist der Kontaktbereich d entlang der Horizontalachse x 1mm lang. Je nach Abmessung des Federkontaktes 2 ist der Kontaktbereich d entlang der Horizontalachse x 0.5mm bis 4mm lang.

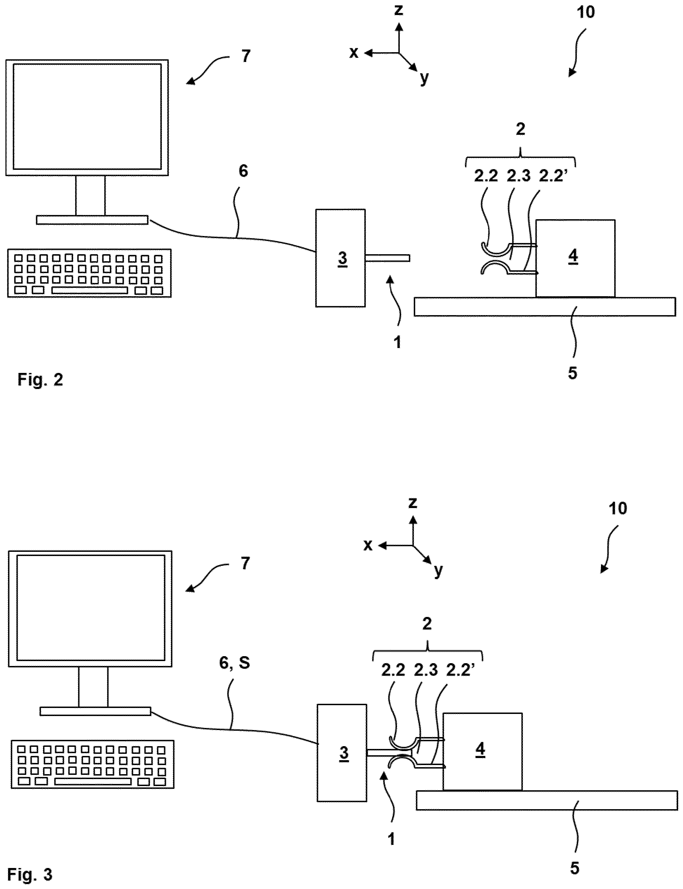

Die Fig. 2 bis 5 zeigen zwei bevorzugte Ausführungsformen einer Kontaktkraftmessvorrichtung 10. Die Kontaktkraftmessvorrichtung 10 misst die Kontaktkraft F, F' des Federkontaktes 2 nach Fig. 1. Die Darstellungen erfolgen in einem Koordinatensystem mit den Achsen x, y, z. Die drei Achsen x, y, z stehen senkrecht aufeinander und schneiden sich in einem Mittelpunkt.

Die Kontaktkraftmessvorrichtung 10 weist einen Messfühler 1, eine Haltevorrichtung 3, eine Tragvorrichtung 4, eine Positioniervorrichtung 5 und eine Auswerteeinheit 7 auf.

Der Messfühler 1 weist im Kontaktbereich d die identischen äusseren Abmessungen wie der Kontaktstift 2.1 des Federkontaktes 2 auf. Insbesondere weist der Messfühler 1 im Kontaktbereich d entlang der Vertikalachse z eine Höhe h' auf, welche identisch mit der Höhe h des Kontaktstiftes 2.1 ist. Der Messfühler 1 weist ein zugespitztes vorderes Ende 1.10 auf. Das zugespitzte vordere Ende 1.10 weist entlang der Vertikalachse z eine geringere Höhe auf, als die Höhe h' des Messfühlers 1.

Der Messfühler 1 ist an der Haltevorrichtung 3 mechanisch befestigt. Der Messfühler 1 wird in der Haltevorrichtung 3 in einer vordefinierten Messhaltung gehalten. Die vordefinierte Messhaltung des Messfühlers 1 weist eine federkontaktspezifische Ortsauflösung entlang jeder der drei Achsen x, y, z auf. Die federkontaktspezifische Ortsauflösung ist kleiner +/-25µm, vorzugsweise +/-5µm. Im Sinne der Erfindung bedeutet der Ausdruck "Halten mit einer federkontaktspezifischen Ortsauflösung", dass der Messfühler 1 die vordefinierte Messhaltung zeitlich beliebig lange mit einer räumlichen Abweichung von kleiner +/-25µm, vorzugsweise von +/-5µm einnimmt.

Die Federkontaktarme 2.2, 2.2' sind an der Tragvorrichtung 4 mechanisch befestigt. Die Federkontaktarme 2.2, 2.2' werden in der Tragvorrichtung 4 gehalten. Vorteilhafterweise wird jeder Federkontaktarm 2.2, 2.2' in mindestens einer schwimmenden Lagerung 4.1, 4.1' gehalten. Jede schwimmende Lagerung 4.1, 4.1' hält einen Federkontaktarm 2.2, 2.2' entlang der Horizontalachse x und der Schrägachse y mit einem Spiel von +/-10µm. Die schwimmende Lagerung 4.1, 4.1' erlaubt also mit dem Spiel von +/-10µm eine räumliche Ausrichtung der Federkontaktarme 2.2, 2.2' entlang der Horizontalachse x und der Schrägachse y in der Tragvorrichtung 4.

Die Federkontaktarme 2.2, 2.2' sind über die Tragvorrichtung 4 an der Positioniervorrichtung 5 angeordnet. Die Positioniervorrichtung 5 ist motorgetrieben und ermöglicht ein Positionieren der Federkontaktarme 2.2, 2.2' im Koordinatensystem. Vorzugsweise weist die Positioniervorrichtung 5 mindestens einen Antrieb entlang der Horizontalachse x auf. Für einen Messvorgang verfährt der Antrieb die Tragvorrichtung 4 und die daran mechanisch befestigten Federkontaktarme 2.2, 2.2' entlang der Horizontalachse x in eine vordefinierte Messposition. Dies wird "Positionieren" genannt. Am Ende des Messvorgangs verfährt der Antrieb die Tragvorrichtung 4 und die daran mechanisch befestigten Federkontaktarme 2.2, 2.2' entlang der Horizontalachse x aus der vordefinierten Messposition. Dies wird "Entfernen" genannt.

Die Positioniervorrichtung 5 positioniert somit die Federkontaktarme 2.2, 2.2' in der vordefinierten Messposition mit einer federkontaktspezifischen Ortsauflösung von kleiner +/-25µm, vorzugsweise von +/-5µm mindestens entlang der Horizontalachse x. Im Sinne der Erfindung bedeutet der Ausdruck "Positionieren mit einer federkontaktspezifischen Ortsauflösung", dass die Federkontaktarme 2.2, 2.2' die vordefinierte Messposition beliebig oft wiederholbar mit einer räumlichen Abweichung entlang der Horizontalachse x von kleiner +/-25µm, vorzugsweise von +/-5µm einnehmen können.

Bei Kenntnis der vorliegenden Erfindung kann der Fachmann aber auch eine Positioniervorrichtung mit drei Antrieben realisieren, wobei je ein Antrieb die Federkontaktarme entlang genau einer Achse x, y, z verfährt. Mit drei Antrieben kann der Fachmann beim Positionieren der Federkontatarme dann eine federkontaktspezifische Ortsauflösung von kleiner +/-25µm, vorzugsweise +/-5µm entlang jeder der drei Achsen x, y, z realisieren.

Bei Kenntnis der vorliegenden Erfindung kann der Fachmann natürlich auch die Kinematik beim Messvorgang umkehren, und anstatt die Federkontaktarme mit der Positioniervorrichtung in der vordefinierte Messposition zu positionieren, den Messfühler mit der Positioniervorrichtung in der vordefinierte Messposition positionieren. Dementsprechend kann er dann anstatt den Messfühler mit der Haltevorrichtung in der vordefinierte Messhaltung zu halten, die Federkontaktarme mit der Haltevorrichtung in der vordefinierten Messhaltung halten.

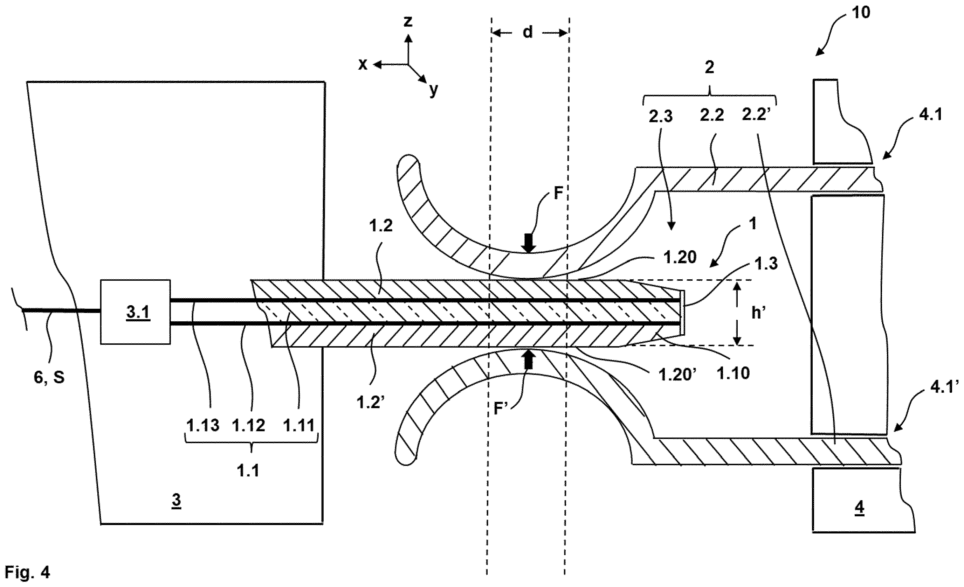

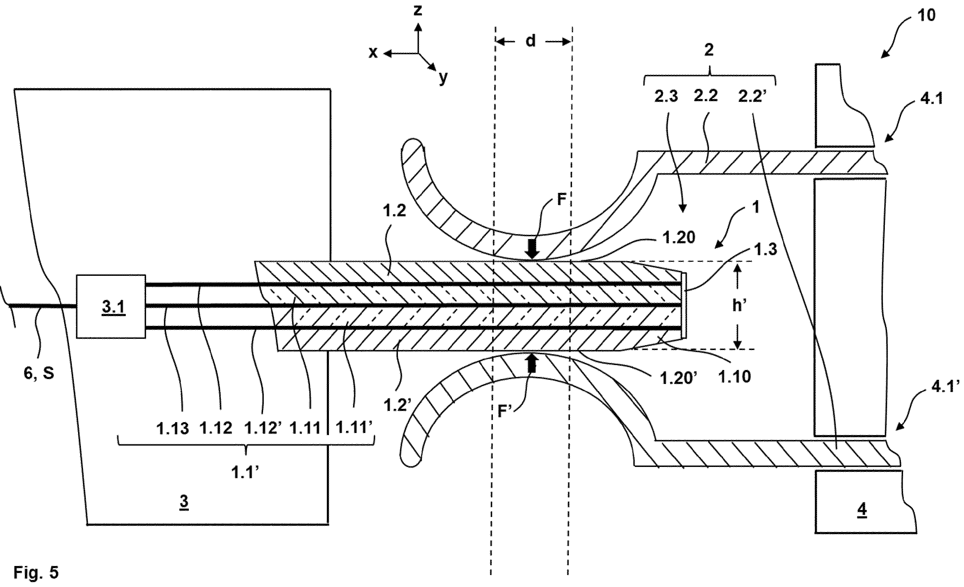

Die Fig. 2 und 3 zeigen das Positionieren der Federkontaktarme 2.2, 2.2' in der vordefinierten Messposition. Die Fig. 4 und 5 zeigen vergrösserte Darstellungen von Teilen von zwei Ausführungsformen des Messfühlers 1 nach Fig. 3.

In den Fig. 2 bis 5 ist der Messfühler 1 in der vordefinierten Messhaltung. In den Fig. 3 bis 5 sind die Federkontaktarme 2.2, 2.2' in der vordefinierten Messposition positioniert. Der Messfühler 1 kommt dann entlang der Vertikalachse z mit seiner Höhe h' zwischen den Federkontaktarmen 2.2, 2.2' zu liegen. Die Federkontaktarme 2.2, 2.2' kontaktieren dann den Messfühler 1 im Kontaktbereich d.

Nun wird der Messfühler 1 im Detail erläutert.

Der Messfühler 1 weist ein Messelement 1.1, 1.1' und zwei Isolatorelemente 1.2, 1.2' auf. Die zwei Isolatorelemente 1.2, 1.2' sind identisch. Bezüglich der Vertikalachse z ist das Messelement 1.1, 1.1' zwischen den zwei Isolatorelementen 1.2, 1.2' angeordnet. Ein erstes Isolatorelement 1.2 liegt direkt oberhalb vom Messelement 1.1, 1.1' und ein zweites Isolatorelement 1.2' liegt direkt unterhalb vom Messelement 1.1, 1.1'. Das Messelement 1.1, 1.1' und die Isolatorelemente 1.2, 1.2' sind mechanisch miteinander verbunden. Vorzugsweise ist das Messelement 1.1, 1.1' stoffschlüssig mit den zwei Isolatorelementen 1.2, 1.2' verbunden. Die stoffschlüssigen Verbindungen erfolgen über Diffusionsschweissen (Thermokompressionsbonden), Löten, Verkleben mit elektrisch leitfähigem Klebematerial, usw.

In einer ersten Ausführungsform nach Fig. 4 weist der Messfühler 1 ein piezoelektrisches Element 1.11 auf. In der zweiten Ausführungsform nach Fig. 5 weist der Messfühler 1 zwei piezoelektrische Elemente 1.11, 1.11' auf. Die zwei piezoelektrischen Elemente 1.11, 1.11' sind identisch.

Das piezoelektrische Element 1.11, 1.11' kann aus piezoelektrischem Kristall wie (SiO₂ Einkristall), Calcium-Gallo-Germanat (Ca₃Ga₂Ge₄O₁₄ oder CGG), Langasit (La₃Ga₅SiO₁₄ oder LGS), Turmalin, Galliumorthophosphat, usw. bestehen. Das piezoelektrische Element 1.11, 1.11' kann aber auch aus Piezokeramiken wie Bariumtitanat (BaTiO₃), Mischungen (PZT) aus Bleititanat (PbTiO₃) und Bleizirkonat (PbZrO₃), usw. sowie aus piezoelektrischen Polymeren wie Polyvinylidenfluorid (PVDF), Polyvinylfluorid (PVF), Polyvinylchlorid (PVC), usw. bestehen. Falls das piezoelektrische Element 1.11, 1.11' aus piezoelektrischem Kristall besteht, ist es mit einer definierten Kristallorientierung geschnitten. Falls das piezoelektrische Element 1.11, 1.11' aus piezoelektrischen Polymeren bestehen, ist es als dünne Folien verfügbar.

Vorzugsweise ist das piezoelektrische Element 1.11, 1.11' für den piezoelektrischen Longitudinaleffekt kristallographisch so orientiert, dass unter der Wirkung der Kontaktkraft F, F' auf einer ersten Oberfläche elektrisch negative Ladungen erzeugt werden und dass auf einer zweiten Oberfläche elektrisch positive Ladungen erzeugt werden.

In der ersten Ausführungsform des Messfühlers 1 nach Fig. 4 ist ein piezoelektrisches Element 1.11 mit seiner ersten Oberfläche gegen das erste Isolatorelement 1.2 gerichtet angeordnet und mit seiner zweiten Oberfläche ist es gegen das zweite Isolatorelement 1.2' gerichtet angeordnet. In der zweiten Ausführungsform des Messfühlers 1 nach Fig. 5 sind ein erstes piezoelektrisches Element 1.11 und ein zweites piezoelektrisches Element 1.11 mit ihren ersten Oberflächen gegeneinander gerichtet angeordnet. Und die zweiten Oberflächen der piezoelektrischen Elemente 1.11, 1.11' sind gegen die zwei Isolatorelemente 1.2, 1.2' gerichtet angeordnet. Im Vergleich mit dem Messfühler 1 der ersten Ausführungsform weist der Messfühler 1 der zweiten Ausführungsform aufgrund der zwei piezoelektrischen Elemente 1.11, 1.11' eine doppelte Empfindlichkeit auf.

Das piezoelektrische Element 1.11, 1.11' und die Isolatorelemente 1.2, 1.2' sind plattenförmig. Jedes piezoelektrische Element 1.11, 1.11' und jedes Isolatorelement 1.2, 1.2' hat eine Länge von beispielweise 12mm entlang der Horizontalachse x und eine Höhe von beispielsweise 0.2mm entlang der Vertikalachse z und eine Breite von beispielsweise 2.4mm entlang der Schrägachse y. In der ersten Ausführungsform nach Fig. 4 hat der Messfühler 1 somit eine Länge von 12mm, eine Höhe h' von 0.6mm und eine Breite von 2.4mm. In der zweiten Ausführungsform nach Fig. 5 hat der Messfühler 1 somit eine Länge von 12mm, eine Höhe h' von 0.8mm und eine Breite von 2.4mm. Der Messfühler 1 der ersten Ausführungsform ist also für einen 0.6mm hohen Kontaktstift 2.1 des Federkontaktes 2 ausgelegt, während der Messfühler 1 der zweiten Ausführungsform für einen 0.8mm hohen Kontaktstift 2.1 des Federkontaktes 2 ausgelegt ist.

Bei Kenntnis der vorliegenden Erfindung kann der Fachmann Messfühler mit kleineren oder grösseren Abmessungen realisieren. So kann die Höhe des Messfühlers auch 0.4mm betragen. Oder die Breite des Messfühlers kann auch 10mm oder mehr betragen.

Mehrere Oberflächen des piezoelektrischen Elementes 1.11, 1.11' sind metallisiert. Die Metallisierung hat entlang der Vertikalachse z eine Höhe von ≤0.1mm. Die Metallisierung kann durch Thermokaschieren mit einer Metallfolie oder durch Abscheiden von Metall geschehen. Als Metall lassen sich Kupfer, Kupferlegierungen, Gold, Goldlegierungen, Aluminium, Aluminiumlegierungen, Silber, Silberlegierungen, usw. verwenden.

Das piezoelektrische Element 1.11, 1.11' ist auf seinen ersten Oberflächen metallisiert. Die Metallisierung der ersten Oberfläche hat eine elektrische Funktion. Über die Metallisierung der ersten Oberfläche werden die elektrisch negativen Ladungen abgegriffen. Die Metallisierung der ersten Oberfläche ist als Signalelektrode 1.13 dargestellt.

Die Metallisierung der ersten Oberfläche hat auch eine Fügefunktion. In der ersten Ausführungsform des Messfühlers 1 nach Fig. 4 sind über die Metallisierung der ersten Oberfläche das erste Isolatorelement 1.2 und das erste piezoelektrische Element 1.11 mechanisch miteinander verbunden. In der zweiten Ausführungsform des Messfühlers 1 nach Fig. 5 sind über die Metallisierung der ersten Oberfläche das erste piezoelektrische Element 1.11 und das zweite piezoelektrische Element 1.11' mechanisch miteinander verbunden.

Das piezoelektrische Element 1.11, 1.11' ist auch auf seiner zweiten Oberflächen metallisiert. Die Metallisierung der zweiten Oberfläche hat eine elektrische Funktion. Über die Metallisierung der zweiten Oberfläche werden die elektrisch positiven Ladungen abgegriffen. In der ersten Ausführungsform des Messfühlers 1 nach Fig. 4 ist die Metallisierung der zweiten Oberfläche des piezoelektrischen Elementes 1.11 als Masseelektrode 1.12 dargestellt. Die Masseelektrode 1.12 ist geerdet. In der zweiten Ausführungsform des Messfühlers 1 nach Fig. 5 ist die Metallisierung der zweiten Oberfläche des ersten piezoelektrischen Elementes 1.11 als erste Masseelektrode 1.12 dargestellt, und die Metallisierung der zweiten Oberfläche des zweiten piezoelektrischen Elementes 1.11' ist als zweite Masseelektrode 1.12' dargestellt. Auch die Masseelektroden 1.12, 1.12' sind geerdet.

Die Metallisierung der zweiten Oberfläche hat auch eine Fügefunktion. In der ersten Ausführungsform des Messfühlers 1 nach Fig. 4 ist über die Metallisierung der zweiten Oberfläche das piezoelektrische Element 1.11 mit dem zweiten Isolatorelement 1.2' stoffschlüssig verbunden. In der zweiten Ausführungsform des Messfühlers 1 nach Fig. 5 ist über die Metallisierung der zweiten Oberfläche das erste piezoelektrische Element 1.11 mit dem ersten Isolatorelement 1.2 stoffschlüssig verbunden und das das zweite piezoelektrische Element 1.11' ist mit dem zweiten Isolatorelement 1.2' stoffschlüssig verbunden.

Vorzugsweise werden die abgegriffenen elektrisch negativen Ladungen über die Signalelektrode 1.13 einem Signalwandler 3.1 der Haltevorrichtung 3 zugeführt. Der Signalwandler 3.1 verstärkt eine pro Zeiteinheit abgegriffene Menge von elektrisch negativen Ladungen elektrisch und digitalisiert die verstärkte Menge von elektrischen Ladungen zu Messsignalen S. Die Messsignale S werden über die Signalleitung 6 an die Auswerteeinheit 7 übermittelt. Auch die abgegriffenen elektrisch positiven Ladungen können über die erste und die zweite Masseelektroden 1.12, 1.12' dem Signalwandler 3.1 der Haltevorrichtung 3 zugeführt werden. Und die pro Zeiteinheit abgegriffene Menge von elektrisch positiven Ladungen kann vom Signalwandler 3.1 elektrisch verstärkt und zu Messsignalen S digitalisiert werden. Bei Kenntnis der vorliegenden Erfindung ist es für den Fachmann aber auch möglich, die abgegriffene Menge von elektrisch positiven Ladungen elektrisch nicht zu verstärken und nicht zu digitalisieren, beispielsweise in dem die erste und die zweite Masseelektrode geerdet sind.

Das Isolatorelement 1.2, 1.2' besteht aus elektrisch isolierendem Material wie Al₂O₃, Saphir, Keramiken, Al₂O₃-Keramiken, usw. Das Isolatorelement 1.2, 1.2' isoliert somit die Signalelektrode 1.13 und die Masseelektrode 1.12, 1.12' elektrisch gegenüber den Federkontaktarmen 2.2, 2.2'.

Das Isolatorelement 1.2, 1.2' besteht aber auch aus abriebfestem Material wie Al₂O₃ Saphir, Keramiken, Al₂O₃-Keramiken, usw. Vorzugsweise weist das Isolatorelement 1.2, 1.2' eine Kontaktoberfläche 1.20, 1.20' auf, über welche Kontaktoberfläche 1.20, 1.20' das Isolatorelement 1.1, 1.2' direkt einen Federkontaktarm 2.2, 2.2" kontaktiert. Die Kontaktoberfläche 1.20, 1.20' weist eine Vickers-Härte im Bereich von 1200 bis 1500 auf. Die Kontaktoberfläche 1.20, 1.20' des Isolatorelementes 1.2, 1.2' ist daher sehr abriebfest und ermöglicht eine sehr hohe Kontaktierzahl von 10⁶. Die Kontaktierzahl ist die Anzahl der im Betrieb der Kontaktkraftmessvorrichtung 10 durchgeführte Kontakte des Messtasters 1 mit den Federkontaktarmen 2.2, 2.2'.

Das Isolatorelement 1.2, 1.2' besteht aber auch aus biegesteifem Material wie Al₂O₃ Saphir, Keramiken, Al₂O₃-Keramiken, usw. Das Isolatorelement 1.2, 1.2' weist einen Elastizitätsmodul (E-Modul) im Bereich von 350GPa bis 470GPa auf.

Der Messfühler 1 weist auch mindestens eine seitliche Isolatorfläche 1.3 auf. Die seitliche Isolatorfläche 1.3 schützt das piezoelektrische Element 1.1, 1.1', die Masseelektrode 1.12, 1.12' und die Signalelektrode 1.13 vor schädlichen Umwelteinflüssen wie Verunreinigungen (Staub, Feuchtigkeit, usw.) und vor elektrischen und elektromagnetischen Störeffekten in der Form von elektromagnetischer Strahlung. Die seitliche Isolatorfläche 1.3 umschliesst den Messfühler 1 auf Seitenflächen weitgehend vollständig. Die Seitenflächen liegen in einer von der Horizontalachse x und der Vertikalachse z aufgespannten xz-Ebene sowie in einer von der Schrägachse y und der Vertikalachse z aufgespannten yz-Ebene. Im Querschnitt der Fig. 4 und 5 ist die seitliche Isolatorfläche 1.3 dargestellt, wie sie das vordere Ende 1.10 des Messfühlers 1 in der yz-Ebene umschliesst. Die seitliche Isolatorfläche 1.3 in der xz-Ebene ist im Querschnitt der Fig. 4 und 5 nicht sichtbar. Die seitliche Isolatorfläche 1.3 besteht aus Material wie Al₂O₃ Saphir, Keramiken, Al₂O₃-Keramiken, usw., welches Material elektrisch isolierend und abriebfest ist. Die seitliche Isolatorfläche 1.3 hat eine Dicke von ≤0.1mm. Vorteilhafterweise wird die seitliche Isolatorfläche 1.3 durch Sputtern, chemische Gasphasenabscheidung, usw. auf den Seitenflächen des Messfühlers 1 abgeschieden.

In der vordefinierten Messposition kontaktieren die Federkontaktarme 2.2, 2.2' den Messfühler 1 in einem Kontaktbereich d entlang der Horizontalachse x. Die Federkontaktarme 2.2, 2.2' kontaktieren direkt die Kontaktoberflächen 1.20, 1.20' der Isolatorelemente 1.2, 1.2'. Beispielsweise ist eine Länge des Kontaktbereiches d entlang der Horizontalachse x gleich 1mm. Die Länge des Kontaktbereiches ist somit um über einen Faktor 40 grösser als die federkontaktspezifische Ortsauflösung der Positioniervorrichtung 5 und der Haltevorrichtung 3 von jeweils kleiner +/-25um. Und mit einer bevorzugten federkontaktspezifischen Ortsauflösung der Positioniervorrichtung 5 und der Haltevorrichtung 3 von +/-5um ist die Länge des Kontaktbereiches d sogar um einen Faktor 200 grösser.

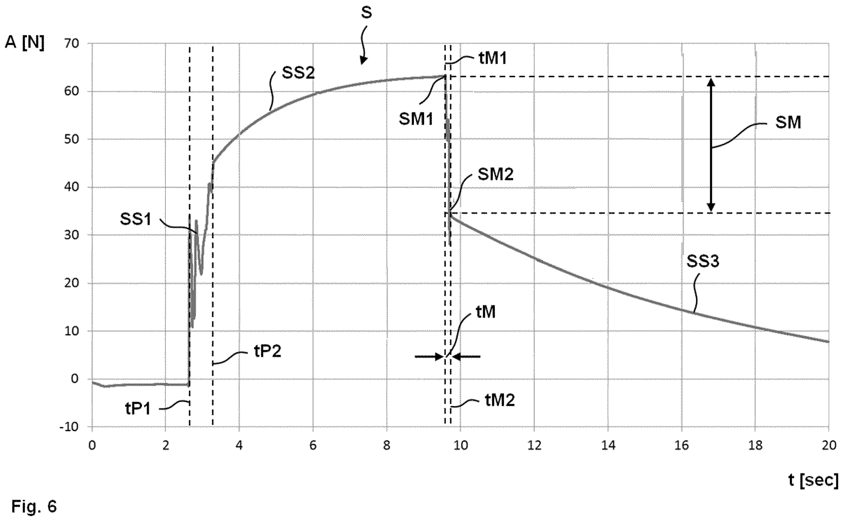

Fig. 6 ist eine Darstellung eines Ergebnisses der Auswertung der Messsignale S in der Auswerteeinheit 7. Die Auswerteeinheit 7 weist einen elektronischen Prozessor, einen physikalischen Datenspeicher und eine physikalische Schnittstelle auf. Im physikalischen Datenspeicher ist ein Auswerteprogramm gespeichert und wird von dort in den elektronischen Prozessor geladen. Das in den elektronischen Prozessor geladene Auswerteprogramm wird vom elektronischen Prozessor ausgeführt. Die Messsignale S werden über die Signalleitung 6 an die physikalische Schnittstelle der Auswerteeinheit 7 übermittelt. Von der physikalischen Schnittstelle werden die Messsignale S in das geladene Auswerteprogramm eingelesen und ausgewertet. Ein Ergebnis der Auswertung der Messsignale S wird dargestellt. Vorzugsweise wird das Ergebnis der Auswertung der Messsignale S auf einem Bildschirm der Auswerteeinheit 7 dargestellt.

In Fig. 6 ist ein Messvorgang dargestellt. Der Messvorgang ist ein zeitlicher Ablauf beim Messen der Kontaktkraft F, F' mit der Kontaktkraftmessvorrichtung 10 nach Fig. 2 bis 5. Der Messvorgang umfasst das Positionieren der Federkontaktarme 2.2, 2.2' in der vordefinierten Messposition, das Messen der Kontaktkraft F, F' und das Entfernen der Federkontaktarme 2.2, 2.2' aus der vordefinierten Messposition. Die Ordinate gibt eine Signalstärke A der Messsignale S in Newton (N) wieder, und auf der Abszisse ist eine Zeit t in Sekunden (sec) aufgetragen. Der Messvorgang dauert rund 10sec (von t=0sec bis t=10sec).

Während der ersten 3.5sec des Messvorganges (von t=0sec bis t=3.5sec) wird die Tragvorrichtung 4 mit den daran mechanisch befestigten Federkontaktarmen 2.2, 2.2' in der vordefinierte Messposition positioniert.

Zu einer ersten Positionierzeit tP1 berühren die Federkontaktarme 2.2, 2.2' das zugespitzte vordere Ende 1.10 des Messfühlers 1 und die Federkontaktarme 2.2, 2.2' werden entlang der Vertikalachse z ausgelenkt. Dies ist durch einen sprunghaften Anstieg der Signalstärke A gekennzeichnet.

Erst zu einer zu einer zweiten Positionierzeit tP2 kommt der Messfühler 1 vollständig in der Kontaktöffnung 2.3 der Federkontaktarme 2.2, 2.2' zu liegen. Wie in Fig. 4 und 5 dargestellt, liegt der Messfühler 1 dann entlang der Vertikalachse z mit seiner Höhe h' zwischen den Federkontaktarmen 2.2, 2.2'. Die Federkontaktarme 2.2, 2.2' kontaktieren dann den Messfühler 1 im Kontaktbereich d.

In der Differenzzeit zwischen der ersten Positionierzeit tP1 und der zweiten Positionierzeit tP2 reiben die Federkontaktarme 2.2, 2.2' über die Kontaktoberflächen 1.20, 1.20' über des Messfühlers 1. Dabei werden vom piezoelektrischen Element 1.11, 1.11' weitere elektrische Ladungen erzeugt. Die weiteren elektrischen Ladungen werden vom Signalwandler 3.1 elektrisch zu ersten Störsignalen SS1 verstärkt und digitalisiert. Die ersten Störsignale SS1 werden beim Messvorgang nicht berücksichtigt.

Sobald die Federkontaktarme 2.2, 2.2' den Messfühler 1 im Kontaktbereich d kontaktieren und die Federkontaktarme 2.2, 2.2' nicht mehr über die Kontaktoberflächen 1.20, 1.20' des Messfühlers 1 reiben, erzeugt das piezoelektrische Element 1.11, 1.11' auch keine weiteren elektrischen Ladungen mehr.

Beim Reiben der Federkontaktarme 2.2, 2.2' über die Kontaktoberflächen 1.20, 1.20' des Messfühlers 1 sammeln sich in kleinen Poren von Oberflächen der Isolatorelemente 1.2, 1.2' und des piezoelektrischen Elementes 1.11, 1.11' elektrische Oberflächenladungen an, welche mit einer Zeitkonstante über die Signalelektrode 1.13 abfliessen. Die elektrischen Oberflächenladungen werden vom Signalwandler 3.1 elektrisch zu zweiten Störsignalen SS2 verstärkt und digitalisiert. Die zweiten Störsignale SS2 nehmen mit der Zeit t ab. Um die zweiten Störsignale SS2 beim Messvorgang nicht zu berücksichtigen, wird eine Zeitdauer von 5.5sec (von t=3.5sec bis t=9.0sec) lang abgewartet, bis die Signalstärke A einen zeitlich weitgehend konstanten Wert annimmt. Bei einem zeitlich weitgehend konstanten Wert ist eine Änderung ΔA der Signalstärke A im Verhältnis zu einer Änderung Δt der Zeit t in einem Bereich von 0.9 ≤ΔA/Δt ≤ 1.1, dann sind mehr als 90% der elektrischen Oberflächenladungen über die Signalelektrode 1.13 abgeflossen.

Nachdem die Federkontaktarme 2.2, 2.2' den Messfühler 1 im Kontaktbereich d kontaktiert haben, üben die räumlich ausgelenkten Federkontaktarme 2.2, 2.2' entlang der Vertikalachse z die Kontaktkraft F, F' aus. Eine weitere Kraftkomponente entlang der Horizontalachse x und/oder der Schrägachse y, die von einer Quersteckung der Federkontaktarme 2.2, 2.2' auf dem Messfühler 1 herrührt, wird durch die schwimmende Lagerung 4.1, 4.1' der Federkontaktarme 2.2, 2.2' in der Tragvorrichtung 4 eliminiert. Dabei wirkt die weitere Kraftkomponente entlang der Horizontalachse x und/oder der Schrägachse y auf die schwimmende Lagerung 4.1, 4.1' und richtet die Federkontaktarme 2.2, 2.2' in der schwimmenden Lagerung 4.1, 4.1' neu aus. Durch die räumliche Neuausrichtung der Federkontaktarme 2.2, 2.2' in der Tragvorrichtung 4 wird die Quersteckung der Federkontaktarme 2.2, 2.2' auf dem Messfühler 1 aufgehoben.

Sobald mehr als 90% der elektrischen Oberflächenladungen über die Signalelektrode 1.13 abgeflossen sind, wird zu einem ersten Zeitpunkt tM1 mit dem Messen der Kontaktkraft F, F' begonnen. Beim ersten Zeitpunkt tM1 wird die Signalstärke A als ersten Messsignal SM1 erfasst. Im Beispiel hat das erste Messsignal SM1 einen zeitlich konstanten Wert von 63N. Das erste Messsignal SM1 wird im physikalischen Datenspeicher gespeichert.

Die Federkontaktarme 2.2, 2.2' werden aus der vordefinierten Messposition entfernt. Dies ist durch eine sprunghafte Abnahme der Signalstärke A gekennzeichnet. Bei einer sprunghaften Abnahme erfüllt die Änderung ΔA der Signalstärke A im Verhältnis zur Änderung Δt der Zeit t die Bedingung AA/At ≥ 5.

Sobald zu einem zweiten Zeitpunkt tM2 die Federkontaktarme 2.2, 2.2' nicht mehr den Messfühler 1 kontaktieren, ist das Messende erreicht. Zum zweiten Zeitpunkt tM2 beendet die Signalstärke A die sprunghafte Abnahme. Die Änderung ΔA der Signalstärke A im Verhältnis zur Änderung Δt der Zeit t erfüllt nicht mehr die Bedingung ΔA/Δt ≥ 5. Zum zweiten Zeitpunkt tM2 nimmt die Signalstärke A mit einem zweiten Messsignal SM2 einen Wert von 35N an. Das zweite Messsignal SM2 wird im physikalischen Datenspeicher gespeichert.

Eine Messzeit tM ist die Differenzzeit zwischen dem ersten Zeitpunkt tM1 und dem zweiten Zeitpunkt tM2 und dauert weniger als 0.5sec. Ein effektives Messsignal SM wird vom Auswerteprogramm ermittelt. Das effektive Messsignal SM ist der Differenzwert zwischen dem ersten Messsignal SM1 und dem zweiten Messsignal SM2 und beträgt 28N. Das effektive Messsignal SM ist ein Mass für die Kontaktkraft F, F'.

In der Messzeit tM reiben die Federkontaktarme 2.2, 2.2' über die Kontaktoberflächen 1.20, 1.20' des Messfühlers 1. Beim Reiben der Federkontaktarme 2.2, 2.2' über die Kontaktoberflächen 1.20, 1.20' des Messfühlers 1 sammeln sich in kleinen Poren von Oberflächen der Isolatorelemente 1.2, 1.2' und des piezoelektrischen Elementes 1.11, 1.11' wieder elektrische Oberflächenladungen an, welche mit einer Zeitkonstante über die Signalelektrode 1.13 abfliessen. Die elektrischen Oberflächenladungen werden vom Signalwandler 3.1 elektrisch zu dritten Störsignalen SS3 verstärkt und digitalisiert. Die dritten Störsignale SS3 werden beim Messvorgang nicht berücksichtigt.

Das Isolatorelement 1.2, 1.2' und die Isolatorfläche 1.3 können aussenseitig metallisiert sein. Die Metallisierung kann durch Thermokaschieren mit einer Metallfolie oder durch Abscheiden von Metall geschehen. Als Metall lassen sich Kupfer, Kupferlegierungen, Gold, Goldlegierungen, Aluminium, Aluminiumlegierungen, Silber, Silberlegierungen, usw. verwenden. Somit können die aussenseitigen Kontaktoberflächen 1.20, 1.20' der Isolatorelemente 1.2, 1.2' metallisiert sein. Die aussenseitige Metallisierung dient der elektromagnetischen Verträglichkeit. Die aussenseitige Metallisierung ist geerdet. Denn beim Reiben der Federkontaktarme 2.2, 2.2' über die Kontaktoberflächen 1.20, 1.20' des Messfühlers 1 werden elektrische Oberflächenladungen erzeugt, welche von der aussenseitigen Metallisierung auf Erdpotential abgeleitet werden.

### Bezugszeichenliste

- 1: Messfühler
- 1.1, 1.1': Messelement
- 1.10: vorderes Ende
- 1.11, 1.11': piezoelektrisches Element
- 1.12, 1.12': Masseelektrode
- 1.13: Signalelektrode
- 1.2, 1.2": Isolatorelement
- 1.20, 1.20': Kontaktoberflächen
- 1.3: Isolatorfläche
- 2: Federkontakt
- 2.1: Kontaktstift
- 2.10: zugespitztes vorderes Ende
- 2.2, 2.2": Federkontaktarm
- 2.3: Kontaktöffnung
- 3: Haltevorrichtung
- 3.1: Signalwandler
- 4: Tragvorrichtung
- 4.1, 4.1': schwimmende Lagerung
- 5: Positioniervorrichtung
- 6: Signalleitung
- 7: Auswerteeinheit
- 10: Kontaktkraftmessvorrichtung
- A: Signalstärke
- d: Kontaktbereich
- F, F': Kontaktkraft
- h: Höhe des Kontaktstiftes
- h': Höhe des Messfühlers
- S: Messsignal
- SM: effektives Messsignal
- SM1, SM2: Messsignal
- SS1, SS2, SS3: Störsignal
- t: Zeit
- tM: Messzeit
- tM1, tM2: Zeitpunkt
- tP1, tP2: Positionierzeit
- x: Horizontalachse
- y: Schrägachse
- z: Vertikalachse

## Patentansprüche

1. Kontaktkraftmessvorrichtung (10), zum Messen einer Kontaktkraft (F, F') eines Federkontaktes (2); der Federkontakt (2) weist einen Kontaktstift (2.1) und Federkontaktarme (2.2, 2.2') auf, bei einem Kontaktieren vom Kontaktstift (2.1) mit den Federkontaktarmen (2.2, 2.2') üben die Federkontaktarme (2.2, 2.2') die Kontaktkraft (F, F') auf den Kontaktstift (2.1) aus; die Kontaktkraftmessvorrichtung (10) weist einen Messfühler (1) auf, der in einem Kontaktbereich (d) eine identische Höhe (h') wie der Kontaktstift (2.1) aufweist; zum Messen der Kontaktkraft (F, F') ist der Messfühler (1) im Kontaktbereich (d) mit den Federkontaktarmen (2.2, 2.2') kontaktierbar; **dadurch gekennzeichnet, dass** der Messfühler (1) Isolatorelemente (1.2, 1.2') aufweist, welche mit den Federkontaktarmen (2.2, 2.2') kontaktieren.

2. Kontaktkraftmessvorrichtung (10) nach Anspruch 1, **dadurch gekennzeichnet, dass** die Isolatorelemente (1.2, 1.2') über Kontaktoberflächen (1.20, 1.20') direkt mit den Federkontaktarmen (2.2, 2.2') kontaktieren; und dass die Kontaktoberflächen (1.20, 1.20') eine Vickers-Härte im Bereich von 1200 bis 1500 aufweisen.

3. Kontaktkraftmessvorrichtung (10) nach einem der Ansprüche 1 oder 2, **dadurch gekennzeichnet, dass** das Isolatorelement (1.2, 1.2') einen Elastizitätsmodul (E-Modul) im Bereich von 350GPa bis 470GPa aufweist.

4. Kontaktkraftmessvorrichtung (10) nach einem der Ansprüche 1 bis 3, **dadurch gekennzeichnet, dass** die Kontaktkraftmessvorrichtung (10) eine Haltevorrichtung (3) aufweist, an welcher Haltevorrichtung (3) der Messfühler (1) mechanisch befestigt ist; und dass die Haltevorrichtung (3) den Messfühler (1) in einer vordefinierte Messhaltung entlang von drei Achsen (x, y, z) mit einer federkontaktspezifischen Ortsauflösung hält.

5. Kontaktkraftmessvorrichtung (10) nach einem der Ansprüche 1 bis 4, **dadurch gekennzeichnet, dass** die Kontaktkraftmessvorrichtung (10) eine Tragvorrichtung (4) aufweist, an welcher Tragvorrichtung (4) die Federkontaktarme (2.2, 2.2') mechanisch befestigt sind; und dass die Tragvorrichtung (4) die Federkontaktarme (2.2, 2.2') entlang einer Horizontalachse (x) und einer Schrägachse (y) mit einem Spiel in mindestens einer schwimmenden Lagerung (4.1, 4.1') hält.

6. Kontaktkraftmessvorrichtung (10) nach einem der Ansprüche 1 bis 5, **dadurch gekennzeichnet, dass** die Kontaktkraftmessvorrichtung (10) eine Positioniervorrichtung (5) aufweist, welche Positioniervorrichtung (5) die Federkontaktarme (2.2, 2.2') in einer vordefinierten Messposition mindestens entlang einer Horizontalachse (x) mit einer federkontaktspezifischen Ortsauflösung positioniert.

7. Verfahren zum Messen einer Kontaktkraft (F, F') eines Federkontaktes (2) mit einer Kontaktkraftmessvorrichtung (10), der Federkontakt (2) weist einen Kontaktstift (2.1) und Federkontaktarme (2.2, 2.2') auf, bei einem Kontaktieren vom Kontaktstift (2.1) mit den Federkontaktarmen (2.2, 2.2') üben die Federkontaktarme (2.2, 2.2') die Kontaktkraft (F, F') auf den Kontaktstift (2.1) aus; die Kontaktkraftmessvorrichtung (10) weist einen Messfühler (1) auf, der in einem Kontaktbereich (d) eine identische Höhe (h') wie der Kontaktstift (2.1) aufweist; zum Messen der Kontaktkraft (F, F') ist der Messfühler (1) im Kontaktbereich (d) mit den Federkontaktarmen (2.2, 2.2') kontaktierbar, **dadurch gekennzeichnet, dass** der Messfühler (1) in einer Haltevorrichtung (3) in einer vordefinierten Messhaltung gehalten wird; dass die Federkontaktarme (2.2, 2.2') von einer Positioniervorrichtung (5) in einer vordefinierten Messposition positioniert werden; und dass der Messfühler (1) Isolatorelemente (1.2, 1.2') aufweist, welche Isolatorelemente (1.2, 1.2') in der vordefinierten Messposition mit den Federkontaktarmen (2.2, 2.2') im Kontaktbereich (d) kontaktieren.

8. Verfahren nach Anspruch 7, **dadurch gekennzeichnet, dass** die die Federkontaktarme (2.2, 2.2') in eine vordefinierte Messposition positioniert werden und der Messfühler (1) in der vordefinierten Halteposition gehalten wird, so dass der Messfühler (1) mit seiner Höhe (h') zwischen den Federkontaktarmen (2.2, 2.2') liegt.

9. Verfahren nach einem der Ansprüche 7 oder 8, **dadurch gekennzeichnet, dass** der Messfühler (1) von der Haltevorrichtung (3) in der vordefinierten Messhaltung entlang von drei Achsen (x, y, z) mit einer federkontaktspezifischen Ortsauflösung gehalten wird.

10. Verfahren nach einem der Ansprüche 7 bis 9, **dadurch gekennzeichnet, dass** die Federkontaktarme (2.2, 2.2') von der Positioniervorrichtung (5) in die vordefinierte Messposition entlang von mindestens einer Horizontalachse (x) mit einer federkontaktspezifischen Ortsauflösung positioniert werden.

11. Verfahren nach einem der Ansprüche 7 bis 10, **dadurch gekennzeichnet, dass** die Federkontaktarme (2.2, 2.2') von einer Tragvorrichtung (4) mit mindestens einer schwimmenden Lagerung (4.1, 4.1') entlang einer Horizontalachse (x) und einer Schrägachse (y) mit einem Spiel gehalten werden; und dass eine weitere Kraftkomponente entlang der Horizontalachse (x) und/oder der Schrägachse (y) die Federkontaktarme (2.2, 2.2') in der schwimmenden Lagerung (4.1, 4.1') neu ausrichtet.

12. Verfahren nach einem der Ansprüche 7 bis 11, **dadurch gekennzeichnet, dass** von den Federkontaktarmen (2.2, 2.2') beim Kontaktieren die Kontaktkraft (F, F') auf den Messfühler (1) ausgeübt wird; dass der Messfühler (1) ein piezoelektrisches Element (1.11, 1.11') aufweist, vom welchem piezoelektrischen Element (1.11, 1.11') unter der Wirkung der Kontaktkraft (F, F') elektrische Ladungen erzeugt werden; dass der Messfühler (1) Elektroden (1.12, 1.12', 1.13) aufweist, von welchen Elektroden (1.12, 1.12', 1.13) die elektrischen Ladungen abgegriffen werden; dass die abgegriffenen elektrisch negativen Ladungen über eine Signalelektrode (1.13) einem Signalwandler (3.1) zugeführt werden; und dass eine pro Zeiteinheit abgegriffene Menge von elektrisch negativen Ladungen vom Signalwandler (3.1) elektrisch verstärkt und zu Messsignalen (S) digitalisiert wird.

13. Verfahren nach Anspruch 12, **dadurch gekennzeichnet, dass** beim Positionieren des Messfühlers (1) in die vordefinierte Messposition, die Federkontaktarme (2.2, 2.2') über die Isolatorelemente (1.2, 1.2') reiben und elektrische Oberflächenladungen erzeugen, welche elektrischen Oberflächenladungen mit einer Zeitkonstante über die Signalelektrode (1.13) abfliessen; dass nachdem die Federkontaktarme (2.2, 2.2') in der vordefinierten Messposition positioniert sind, mit dem Messen der Kontaktkraft (F, F') zu einem ersten Zeitpunkt (tM1) begonnen wird, sobald mehr als 90% der elektrischen Oberflächenladungen abgeflossen sind; und dass zum ersten Zeitpunkt (tM1) eine Signalstärke (A) der Messsignale (S) als ersten Messsignal (SM1) erfasst wird.

14. Verfahren nach Anspruch 13, **dadurch gekennzeichnet, dass** die Federkontaktarme (2.2, 2.2') aus der vordefinierten Messposition entfernt werden; dass beim Entfernen der Federkontaktarme (2.2, 2.2') aus der vordefinierten Messposition eine Signalstärke (A) der Messsignale (S) sprunghaft abnimmt; dass sobald zu einem zweiten Zeitpunkt (tM2) die Federkontaktarme (2.2, 2.2') nicht mehr den Messfühler (1) kontaktieren, die Signalstärke (A) der Messsignale (S) nicht mehr sprunghaft abnimmt; und dass zum zweiten Zeitpunkt (tM2) die Signalstärke (A) der Messsignale (S) als zweites Messsignal (SM2) erfasst wird.

15. Verfahren nach Anspruch 14, **dadurch gekennzeichnet, dass** als effektives Messsignal (SM) für die Kontaktkraft (F, F') ein Differenzwert zwischen dem ersten Messsignal (SM1) und dem zweiten Messsignal (SM2) ermittelt wird.
